# EUROPÄISCHE PATENTSCHRIFT

(11) **EP 0 607 504 B1**
(45) Veröffentlichungstag und Bekanntmachung des Hinweises auf die Patenterteilung: **02.07.1997**
(21) Anmeldenummer: 93116132.7
(22) Anmeldetag: 06.10.1993
(51) Int. Cl.: F16L 35/00

(54) **Hochdruckreinigungsgerät**
High-pressure cleaning device
Appareil de nettoyage à haute pression

(30) Priorität: 23.10.1992 DE 4235755
(43) Veröffentlichungstag der Anmeldung: 27.07.1994
(73) Patentinhaber: Alfred Kärcher GmbH & Co., 71364 Winnenden (DE)
(72) Erfinder: Schneider, Josef, D-71522 Backnang (DE); Frech, Klaus, D-71404 Korb (DE)
(74) Vertreter: Hoeger, Stellrecht & Partner

(56) Entgegenhaltungen:
- DE-U- 9 001 545
- DE-U- 9 202 329
- GB-A- 2 122 714
- US-A- 2 025 067

## Beschreibung

Die Erfindung betrifft ein Hochdruckreinigungsgerät mit einem flexiblen Hochdruckschlauch, der in ein Handstück einer Flüssigkeitsabgabevorrichtung einmündet, und mit einer den Hochdruckschlauch im Bereich der Einmündung in die Flüssigkeitsabgabevorrichtung umgebenden Knickschutztülle.

Bei Hochdruckreinigungsgeräten werden flexible Hochdruckschläuche eingesetzt, um eine Verbindung zwischen dem häufig stationär angeordneten Hochdruckreinigungsgerät und der von einer Bedienungsperson an den Einsatzort bewegten Flüssigkeitsabgabevorrichtung zu schaffen, beispielsweise kann dies eine Sprühlanze oder eine Hochdrucksprühpistole sein. Im Eintrittsbereich des Hochdruckschlauches in diese Flüssigkeitsabgabevorrichtung ist der Hochdruckschlauch erhöhten mechanischen Belastungen unterworfen, da in diesem Bereich die Gefahr einer Abknickung besteht. Um dies zu vermeiden, ist es bekannt, Hochdruckschläuche im Einmündungsbereich in die Flüssigkeitsabgabevorrichtung mit einer Knickschutztülle zu umgeben, wobei dabei in der Regel hülsenförmige Kunststoffteile verwendet werden, die eine gewisse Flexibilität aufweisen und den Hochdruckschlauch über die gesamte Länge der Knickschutztülle mit einer im wesentlichen gleichen elastischen Rückstellkraft gegen Verbiegung schützen.

Es hat sich herausgestellt, daß diese im wesentlichen über die gesamte Länge der Knickschutztülle gleichbleibende Rückstellkraft ungünstig ist, die Rückstellkraft sollte für eine optimale Schonung des Hochdruckschlauches in Richtung auf das freie Ende der Knickschutztülle abnehmen.

Es ist daher Aufgabe der Erfindung, ein gattungsgemäßes Hochdruckreinigungsgerät so auszubilden, daß der Hochdruckschlauch im Einmündungsbereich in die Flüssigkeitsabgabevorrichtung mit einer Rückstellkraft gegen Abknicken gesichert wird, die mit zunehmendem Abstand von der Eintrittsstelle in die Abgabevorrichtung abnimmt.

Diese Aufgabe wird bei einem Hochdruckreinigungsgerät der eingangs beschriebenen Art erfindungsgemäß dadurch gelöst, daß die Knickschutztülle zumindest in ihrem der Flüssigkeitsabgabevorrichtung abgewandten Teil aus einem den Hochdruckschlauch schraubenförmig umgebenden Band besteht und daß sich der Innendurchmesser der von dem Band umgebenen Aufnahmeöffnung für den Hochdruckschlauch von der Flüssigkeitsabgabevorrichtung zum freien Ende der Knickschutztülle hin vergrößert, während der Außendurchmesser der Knickschutztülle von der Flüssigkeitsabgabevorrichtung zum freien Ende der Knickschutztülle gleichbleibt oder abnimmt.

Eine solche Ausgestaltung, bei welcher der Hockdruckschlauch durch das schraubenförmige Band der Knickschutztülle elastisch unterstützt wird, ermöglicht eine Einstellung der Rückstellkraft dadurch, daß aufgrund der Aufweitung des Innendurchmessers der Aufnahmeöffnung und aufgrund des gleichbleibenden oder abnehmenden Außendurchmessers die Materialstärke oder Dicke des Bandes zum freien Ende der Knickschutztülle hin abnimmt. Diese Abnahme führt zu einer Herabsetzung der Rückstellkräfte in der gewünschten Weise, so daß bei geeigneter Dimensionierung exakt der gewünschte Abnahmeverlauf der Rückstellkräfte erreicht werden kann.

Bei einer bevorzugten Ausführungsform ist vorgesehen, daß das Band einen im wesentlichen trapezförmigen Querschnitt aufweist und daß die Breite des Bandes an der Außenseite der Knickschutztülle zu ihrem freien Ende hin zunimmt. Dadurch kann erreicht werden, daß sich die wegen des trapezförmigen Querschnitts und der Zunahme des Innendurchmessers der Aufnahmeöffnung zum freien Ende der Knickschutztülle hin breiter werdenden Spalte zwischen den einzelnen Gängen des Bandes weniger stark aufweiten, das heißt, die Zunahme der Abstände zwischen den benachbarten Bändern kann zum freien Ende hin begrenzt werden.

Besonders vorteilhaft ist es, wenn die Zunahme der Bandbreite und die Abnahme der Banddicke durch die Erhöhung des Innendurchmessers der Aufnahmeöffnung so aufeinander abgestimmt sind, daß die Breite des Bandes an der die Aufnahmeöffnung begrenzenden Unterseite des Bandes über dessen gesamte Länge gleich ist. Mit einem solchen Band, dessen Basisfläche über die gesamte Länge gleichbleibt, läßt sich eine Knickschutztülle formen, bei der auch die Abstände zwischen benachbarten Schraubengängen im wesentlichen gleich gehalten werden können, so daß keine allzu großen Spalte entstehen, durch die hindurch gegebenenfalls eine Beschädigung des Hochdruckschlauches erfolgen könnte.

Bei einer bevorzugten Ausführungsform ist vorgesehen, daß die von dem Band gebildeten Schraubengänge in einem der Flüssigkeitsabgabevorrichtung benachbarten Bereich miteinander verbunden sind, so daß die Knickschutztülle in dem an der Flüssigkeitsabgabevorrichtung anliegenden Teil rohrförmig ausgebildet ist, während sie in einem entfernteren Bereich den Hochdruckschlauch schraubenförmig umgibt.

Günstig ist es, wenn das Band an seiner Außenfläche eine in Bandlängsrichtung verlaufende, mittige Rinne aufweist.

Vorzugsweise wird die Knickschutztülle einstückig aus einem gummielastischen Kunststoff hergestellt. Dabei ist ganz wesentlich, daß durch die Aufweitung des Innendurchmessers der Aufnahmeöffnung eine einstückige Herstellung einer solchen Knickschutztülle möglich wird, denn dadurch wird die Ausformung der Knickschutztülle nach deren Herstellung erst ermöglicht. Ein in die Knickschutztülle eingeschobener Kern läßt sich aufgrund des zunehmenden Innendurchmessers leicht zum freien Ende der Knickschutztülle hin aus dieser herausziehen.

Die nachfolgende Beschreibung einer bevorzugten Ausführungsform der Erfindung dient im Zusammenhang mit der Zeichnung der näheren Erläuterung. Es zeigen:

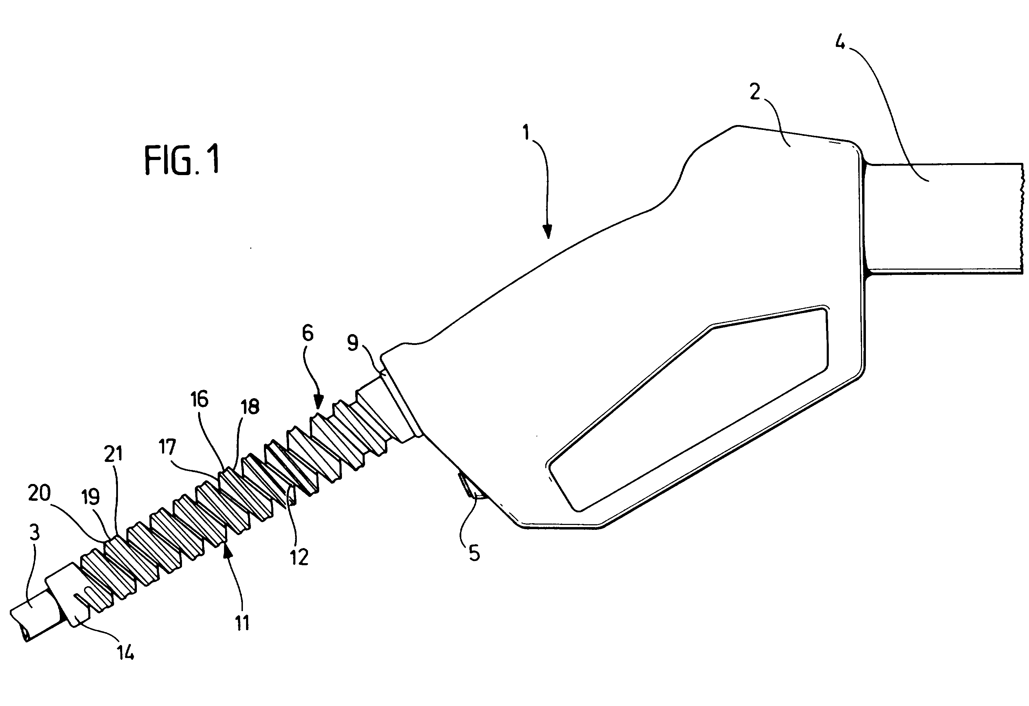

- Figur 1: eine Seitenansicht eines Handgriffs einer Spritzpistole eines Hochdruckreinigungsgerätes mit einem in die Pistole einmündenden, von einer Knickschutztülle umgebenen Hochdruckschlauch und
- Figur 2: eine Seitenansicht einer in Längsrichtung teilweise aufgeschnittenen Knickschutztülle.

Die in der Zeichnung dargestellte Handpistole 1 eines Hochdruckreinigungsgerätes umfaßt ein Gehäuse 2, das beispielsweise aus zwei spiegelbildlichen Gehäusehälften besteht, die durch Verschraubung oder dergleichen miteinander verbunden werden können. Das Gehäuse 2 umgibt einen in der Zeichnung nicht dargestellten Ventilblock, der einerseits mit einem auf der einen Seite in das Gehäuse eintretenden, flexiblen Hochdruckschlauch 3 verbunden ist und andererseits mit einem auf der gegenüberliegenden Seite aus dem Gehäuse 2 austretenden, starren Strahlrohr 4. Durch Betätigung eines Handabzuges 5 kann ein Schließventil im Inneren des Gehäuses 2 geöffnet und geschlossen werden, so daß dadurch der Durchtritt einer unter Hochdruck angelieferten Reinigungsflüssigkeit aus dem Hochdruckschlauch 3 in das Strahlrohr 4 gesteuert wird.

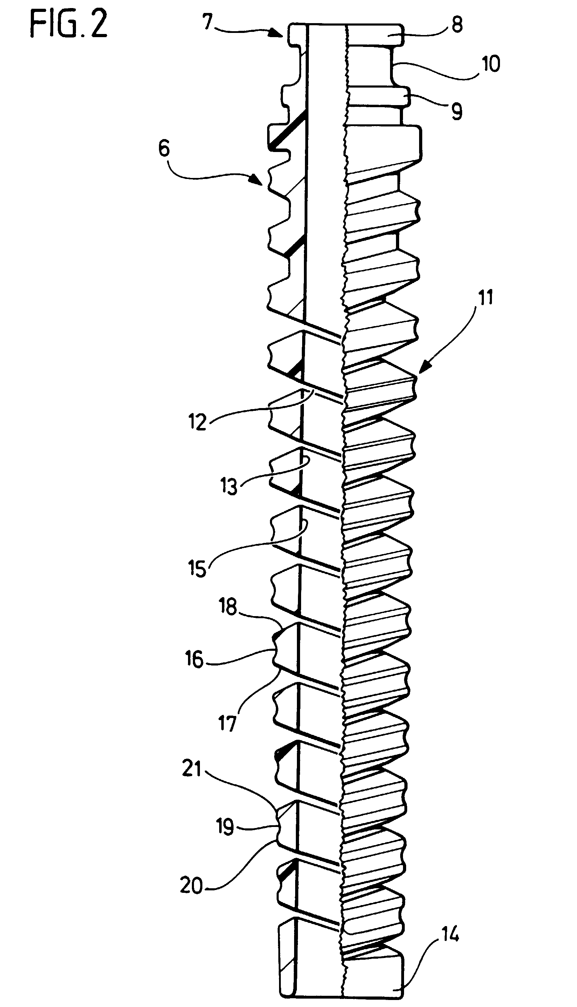

Im Eintrittsbereich in das Gehäuse 2 ist der Hochdruckschlauch 3 von einer Knickschutztülle 6 umgeben, die in das Innere des Gehäuse 2 hineinragt und an ihrem im Inneren des Gehäuses 2 angeordneten Ende einen Befestigungsstutzen 7 mit zwei im Abstand zueinander angeordneten umlaufenden Ringflanschen 8 und 9 aufweist (Figur 2). Die beiden Hälften des Gehäuses 2 greifen in die durch die Ringflansche 8 und 9 definierte Nut 10 ein und legen dadurch die Knickschutztülle 6 fest.

Die Knickschutztülle ist als einstückiges Formteil aus einem elastisch verformbaren Kunststoff hergestellt, beispielsweise aus Polyamid, und umfaßt im wesentlichen ein schraubenförmig den Hochdruckschlauch 3 umgebendes Band 11, dessen Schraubengänge in dem dem Stutzen 7 benachbarten Bereich miteinander verbunden sind, während sie in einem weiter entfernten Bereich durch einen schmalen Spalt 12 voneinander getrennt sind. Damit wird der Hochdruckschlauch in dem dem Gehäuse 2 benachbarten Bereich von einer rohrförmig ausgebildeten Knickschutztülle 6 umgeben, auf deren Außenseite das Band 11 in Form von schraubenförmig verlaufenden Verstärkungsrippen angeformt ist, während in einem weiter entfernten Bereich das Band 11 selbständige Schraubengänge ausbildet, die von den jeweils benachbarten Schraubengängen getrennt sind. In diesem weiter entfernten Bereich wirkt also die Knickschutztülle wie eine Schraubenfeder, im oberen Bereich dagegen wie ein elastisch verbiegbares Rohr.

Der Innendurchmesser der von der Knickschutztülle 6 ausgebildeten Aufnahmeöffnung 13 für den Hochdruckschlauch 3 nimmt von der Einspannstelle am Gehäuse 2 zum freien Ende 14 hin kontinuierlich zu, der Außendurchmesser der Knickschutztülle dagegen nimmt in der gleichen Richtung kontinuierlich ab, so daß insgesamt die Dicke des Bandes 11 zum freien Ende 14 hin stark abnimmt. Diese Abnahme führt dazu, daß die elastischen Rückstellkräfte der Knickschutztülle 6 zum freien Ende hin stark abnehmen, so daß von der Einspannstelle des Hochdruckschlauches 3 zum freien Ende 14 der Knickschutztülle 6 ein fast kontinuierlicher Übergang zwischen einem kräftigen Knickschutz durch die Knickschutztülle 6 und einem völlig fehlenden Schutz in dem nicht von der Knickschutztülle umgebenen Teil des Hochdruckschlauches erreicht werden kann. Dies führt zu einem optimalen Knickschutz, denn dieser kontinuierliche Übergang verhindert auch die Gefahr eines Abknickens des Hochdruckschlauches im Endbereich der Knickschutztülle 6.

Das Band 11 hat einen im wesentlichen trapezförmigen Querschnitt mit einer ebenen, die Aufnahmeöffnung 13 definierenden Unterseite 15, einer im wesentlichen parallel dazu verlaufenden Oberseite 16 und zwei die Unterseite mit der Oberseite verbindenden, von der Unterseite zur Oberseite schräg aufeinander zulaufenden Seitenflächen 17, 18. Die Breite der Oberseite des Bandes nimmt von der Einspannseite zum freien Ende 14 hin kontinuierlich zu, wobei diese Zunahme so gewählt ist, daß die Unterseite 15 des Bandes trotz der abnehmenden Dicke des Bandes im wesentlichen über die gesamte Bandlänge gleichbleibt. Dies ermöglicht es, auch die Breite des Spaltes 12 über die gesamte Länge der Knickschutztülle im wesentlichen gleich auszubilden, so daß keine größeren ungeschützten Bereiche des Hochdruckschlauches 3 auftreten.

Die Oberseite 16 des Bandes weist eine in Bandlängsrichtung verlaufende, mittige Rinne 19 auf, die im wesentlichen über die gesamte Bandlänge eine konstante Breite hat. Durch die zunehmende Breite der Oberseite 16 des Bandes führt dies dazu, daß die Rinne 19 von zum freien Ende 14 der Knickschutztülle 6 hin breiter werdenden Rippen 20, 21 begrenzt wird, die durch die Kante zwischen der Oberseite 16 und den beiden Seitenflächen 17 beziehungsweise 18 ausgebildet werden.

## Patentansprüche

1. Hochdruckreinigungsgerät mit einem flexiblen Hochdruckschlauch, der in ein Handstück einer Flüssigkeitsabgabevorrichtung einmündet, und mit einer den Hochdruckschlauch im Bereich der Einmündung in die Flüssigkeitsabgabevorrichtung umgebenden Knickschutztülle, dadurch gekennzeichnet, daß die Knickschutztülle (6) zumindest in ihrem der Flüssigkeitsabgabevorrichtung (1) abgewandten Teil aus einem den Hochdruckschlauch (3) schraubenförmig umgebenden Band (11) besteht und daß sich der Innendurchmesser der von dem Band (11) umgebenen Aufnahmeöffnung (13) für den Hochdruckschlauch (3) von der Flüssigkeitsabgabevorrichtung (1) zum freien Ende (14) der Knickschutztülle (6) hin vergrößert, während der Außendurchmesser der Knickschutztülle (6) von der Flüssigkeitsabgabevorrichtung (1) zum freien Ende (14) der Knickschutztülle (6) gleichbleibt oder abnimmt.

2. Hochdruckreinigungsgerät nach Anspruch 1, dadurch gekennzeichnet, daß das Band (11) einen im wesentlichen trapezförmigen Querschnitt aufweist und daß die Breite des Bandes (11) an der Außenseite (16) der Knickschutztülle (6) zu ihrem freien Ende (14) hin zunimmt.

3. Hochdruckreinigungsgerät nach Anspruch 2, dadurch gekennzeichnet, daß die Zunahme der Bandbreite und die Abnahme der Banddicke durch die Erhöhung des Innendurchmessers der Aufnahmeöffnung (13) so aufeinander abgestimmt sind, daß die Breite des Bandes (11) an der die Aufnahmeöffnung (13) begrenzenden Unterseite (15) des Bandes (11) über dessen gesamte Länge gleich ist.

4. Hochdruckreinigungsgerät nach einem der voranstehenden Ansprüche, dadurch gekennzeichnet, daß die von dem Band (11) gebildeten Schraubengänge in einem der Flüssigkeitsabgabevorrichtung (1) benachbarten Bereich miteinander verbunden sind.

5. Hochdruckreinigungsgerät nach einem der voranstehenden Ansprüche, dadurch gekennzeichnet, daß das Band (11) an seiner Außenfläche (16) eine in Bandlängsrichtung verlaufende, mittige Rinne (19) aufweist.

6. Hochdruckreinigungsgerät nach einem der voranstehenden Ansprüche, dadurch gekennzeichnet, daß die Knickschutztülle (6) einstückig aus einem gummielastischen Kunststoff hergestellt ist.

## Claims

1. A high-pressure cleaning device comprising a flexible high-pressure tube joining a handpiece of a liquid dispenser, and an anti-bending sleeve surrounding the high-pressure tube in the region of the junction with the liquid dispenser, characterised in that the anti-bending sleeve (6), at least in its portion remote from the liquid dispenser (1), comprises a band (11) helically surrounding the high-pressure tube (3), and in that the inner diameter of the receiving opening (13), surrounded by the band (11) and provided for the high-pressure tube (3), increases from the liquid dispenser (1) towards the free end (14) of the anti-bending sleeve (6), whereas the outer diameter of the anti-bending sleeve (6) remains the same or decreases from the liquid dispenser (1) towards the free end (14) of the anti-bending sleeve (6).

2. A high-pressure cleaning device according to claim 1,
characterised in that the band (11) has a substantially trapezoidal cross-section and in that the width of the band (11) on the outside (16) of the anti-bending sleeve (6) increases towards the free end (14) thereof.

3. A high-pressure cleaning device according to claim 2,
characterised in that the increase in the band width and the decrease in the band thickness due to the increase in the inner diameter of the receiving opening (13) are co-ordinated in such a manner that the width of the band (11) on the underside (15) of the band (11) is the same over the entire length thereof, the underside (15) forming the boundary of the receiving opening (13).

4. A high-pressure cleaning device according to any one of the preceding claims, characterised in that the turns formed by the band (11) are interconnected in a region adjacent to the liquid dispenser (1).

5. A high-pressure cleaning device according to any one of the preceding claims, characterised in that the outer surface (16) of the band (11) has a central groove (19) extending in the longitudinal direction of the band (11).

6. A high-pressure cleaning device according to any one of the preceding claims, characterised in that the anti-bending sleeve (6) is made in one piece from a synthetic rubber.

## Revendications

1. Appareil de nettoyage à haute pression comprenant un tuyau de haute pression flexible qui débouche dans une pièce à main appartenant à un dispositif débiteur de liquide, et un manchon de protection anti-pliage, qui entoure le tuyau à haute pression dans la région du débouché dans le dispositif débiteur de liquide, caractérisé en ce que le manchon de protection anti-pliage (6) est composé, du moins dans sa partie éloignée du dispositif débiteur de liquide (1), d'une bande (11) qui entoure le tuyau à haute pression (3) en hélice, et en ce que le diamètre intérieur de l'ouverture (13) de réception du tuyau à haute pression (3) qui est entouré par la bande (11) s'accroît du dispositif débiteur de liquide (1) jusqu'à l'extrémité libre (14) du manchon de protection anti-pliage (6), tandis que le diamètre extérieur du manchon de protection anti-pliage (6) reste constant ou décroît du dispositif débiteur de liquide (1) jusqu'à l'extrémité libre (14) du manchon de protection anti-pliage (6).

2. Appareil de nettoyage à haute pression selon la revendication 1, caractérisé en ce que la bande (11) présente une section sensiblement trapézoïdale et en ce que la largeur de la bande (11), mesurée au niveau de la face extérieure (16) du manchon de protection anti-pliage (6), croît en direction de son extrémité libre (14).

3. Appareil de nettoyage à haute pression selon la revendication 2, caractérisé en ce que l'accroissement de la largeur de la bande et la diminution de l'épaisseur de la bande sont accordés l'un à l'autre, par l'accroissement du diamètre intérieur de l'ouverture réceptrice (13), de telle manière que la largeur de la bande (11), mesurée au niveau de la face inférieure (15) de la bande (11), qui limite l'ouverture réceptrice (13), soit constante sur toute la longueur de la bande.

4. Appareil de nettoyage à haute pression selon une des revendications précédentes, caractérisé en ce que les spires formées par la bande (11) sont réunies les unes aux autres dans une région adjacente au dispositif débiteur de liquide (1)·

5. Appareil de nettoyage à haute pression selon une des revendications précédentes, caractérisé en ce que la bande (11) présente, sur sa surface extérieure (16), une gorge centrale (19) s'étendant dans la direction longitudinale de la bande.

6. Appareil de nettoyage à haute pression selon une des revendications précédentes, caractérisé en ce que le manchon de protection anti-pliage (6) est fabriqué en une seule pièce en une matière plastique ayant l'élasticité du caoutchouc.
